# EUROPEAN PATENT SPECIFICATION

(11) **EP 3 293 470 B1**
(45) Date of publication and mention of the grant of the patent: **20.02.2019**
(21) Application number: 17187866.3
(22) Date of filing: 25.08.2017
(51) Int. Cl.: F25B 41/06

(54) **ELECTRIC VALVE**
ELEKTRISCHES VENTIL
SOUPAPE É?LECTRIQUE

(30) Priority: 29.08.2016 JP 2016167098
(43) Date of publication of application: 14.03.2018
(73) Proprietor: Fujikoki Corporation, Tokyo 158-0082 (JP)
(72) Inventor: YOSHIDA, Tatsuya, Setagaya-ku, Tokyo 158-0082 (JP); YAZAWA, Masashi, Setagaya-ku, Tokyo 158-0082 (JP)
(74) Representative: Schweiger, Martin

(56) References cited:
- JP-A- 2009 228 689
- JP-A- 2010 065 744
- JP-A- 2011 208 716

## Description

### TECHNICAL FIELD

The present invention relates to an electric valve which is used while being incorporated in a flow control valve or the like in a refrigeration cycle of an air conditioner, a refrigerator, or the like.

### BACKGROUND ART

As this kind of electric valve, for example, there is known an electric valve including: a valve main body which includes a valve chamber and a valve opening formed in the valve chamber; a valve body which opens and closes the valve opening; a can which protrudes from the valve main body; a stator coil which is disposed outside the can; a rotor which is disposed inside the can and rotates by energization excitation to the stator coil; a screw pipe (a guide bush) which is fixed to the valve body; a valve shaft holder which is formed to be rotatable along with the rotor and opens and closes the valve opening by the valve body through the valve shaft in terms of a screw feeding action of the screw pipe; a valve closing spring which is interposed between the valve shaft holder and the valve shaft and urges the valve body in a direction in which the valve opening is closed through the valve shaft; and a stopper (a fixed member) which prevents a relative movement between the valve shaft holder and the rotor in a direction in which the valve body opens and closes the valve opening by the corporation with the valve closing spring, wherein a disk-shaped portion of the stopper comes into contact with upper surfaces of the rotor and the valve shaft holder and a cylindrical portion is welded and fixed to an upper portion (an upper small-diameter portion) of the valve shaft (for example, see Patent Document 1).

In this kind of conventional electric valve, in order to reliably close the valve opening by the valve body, the valve body generally sits on a valve seat provided in the valve opening to close the valve opening and the rotor and the valve shaft holder are rotated to move down by a predetermined amount (a rotation amount) in a valve closing direction. Accordingly, the valve closing spring which is interposed between the valve shaft holder and the valve shaft is compressed so that the valve body is pressed against the valve seat.

Specifically, energization excitation to the stator coil in one direction is performed at the time of closing the electric valve. Accordingly, the rotor is rotated and then the valve shaft holder rotates relative to a guide bush (a screw pipe). Here, for example, when the valve shaft holder moves down by a screw feeding mechanism including (a fixing screw portion of) the guide bush and (a movable screw portion of) the valve shaft holder, the valve shaft moves down so that the valve body closes the valve opening. At this time, the fixed stopper body (the lower stopper body) of the guide bush and the movable stopper body (the upper stopper body) of the valve shaft holder constituting the stopper mechanism restricting the downward movement of the valve shaft holder and the rotation of the valve shaft holder (and the rotor) in the valve closing direction can be separated from each other.

When energization excitation to the stator coil in one direction is performed from the above-described state, the valve shaft holder further moves down by the screw feeding mechanism while the valve body closes the valve opening (that is, the valve shaft is stopped). When the valve shaft holder moves down by a predetermined amount, the movable stopper body of the valve shaft holder comes into contact with the fixed stopper body of the guide bush and the further downward movement of the valve shaft holder is restricted by the stopper mechanism. At this time, since the valve closing spring which is interposed between the valve shaft holder and the valve shaft is compressed, the valve body is pressed against the valve seat to ensure a valve closing performance (a fully closed state). At this time, the valve shaft holder is separated from the fixed member (the stopper) fixed to the valve shaft by a predetermined gap in the elevation direction.

Meanwhile, energization excitation to the stator coil in the other direction is performed at the time of opening the electric valve from the fully closed state. Accordingly, the rotor rotates in a direction opposite to the above-described direction with respect to the guide bush fixed to the valve main body and the valve shaft holder moves up by the screw feeding mechanism. Here, since the valve shaft holder is separated from the fixed member fixed to the valve shaft by a predetermined gap, the valve shaft holder moves up while the valve body closes the valve opening (the valve shaft is stopped) in the meantime (while the valve shaft holder moves up by a predetermined gap).

When energization excitation to the stator coil in the other direction is performed from the above-described state so that the valve shaft holder moves up by the above-described predetermined gap, (the upper surface of) the valve shaft holder comes into contact with (the lower surface of the disk-shaped portion of) the fixed member fixed to the valve shaft. Accordingly, the valve shaft holder moves up along with the valve shaft and the valve body of the lower end of the valve shaft moves up to open the valve opening.

In this way, the rotor rotates by energization excitation to the stator coil and thus the valve shaft holder rotates. Accordingly, since the valve shaft moves up along with the valve body, a gap (a lift amount) between the valve body and the valve seat is increased and decreased so that a flow rate of a fluid such as a refrigerant is adjusted.

### CITATION LIST

### PATENT DOCUMENT

Patent Document 1: JP 2011-208716 A

### SUMMARY OF THE INVENTION

### PROBLEM TO BE SOLVED BY THE INVENTION

Incidentally, in the above-described electric valve, the valve shaft holder is separated from the fixed member in the fully closed state and the valve shaft holder comes into contact with the stopped fixed member when the valve shaft holder rotates to move up at the time of opening the valve (also at this time, the valve body is slightly pressed against the valve seat). However, at this time, the upper surface of the valve shaft holder and the lower surface of the disk-shaped portion of the fixed member can come into contact with each other at large flat surfaces (sliding surfaces) having a large surface area. For that reason, since the contact resistance (the rotation sliding resistance) generated when the valve shaft holder comes into contact with the fixed member increases, there is a concern that a positional misalignment (loss of synchronization) or a stop of the rotor occurs.

Further, when the valve shaft holder is formed as a molded product of resin or the like, a problem arises in that the contact resistance (the rotation sliding resistance) further increases due to a weld line or a parting line formed at the time of molding or a problem arises in that the flatness of the sliding surface of the valve shaft holder is degraded so that the axial misalignment of the valve shaft (an inclination with respect to the axis or eccentricity in a direction perpendicular to the axis) occurs.

The invention has been made in view of the above-described problems and an object of the invention is to provide an electric valve capable of preventing degradation in responsiveness and suppressing an axial misalignment of a valve shaft by improving a sliding performance between a valve shaft holder and a fixed member to prevent a positional misalignment (loss of synchronization) or a stop of a rotor.

### MEANS FOR SOLVING PROBLEM

In order to solve the above-described problems, an electric valve of the invention includes: a valve shaft which is provided with a valve body; a guide bush into which the valve shaft is inserted to be relatively movable in an axial direction and to be rotatable; a valve main body which includes a valve opening having a valve seat toward and from which the valve body moves and which has the guide bush attached and fixed thereto; a valve shaft holder which is externally attached to the valve shaft; an urging member that is interposed between the valve shaft and the valve shaft holder to urge the valve body in a valve closing direction; a fixed member that is fixed to the valve shaft to connect the valve shaft holder to the valve shaft and is brought into contact with the valve shaft holder by an urging force of the urging member; a motor which includes a rotor and a stator for rotating the valve shaft holder with respect to the guide bush; a screw feeding mechanism which is provided between the guide bush and the valve shaft holder to elevate the valve body of the valve shaft with respect to the valve seat of the valve main body in response to the rotational driving of the rotor; and a lower stopper mechanism which regulates a downward rotation movement of the valve shaft holder, wherein a part of a facing surface near the fixed member in the valve shaft holder is provided with a convex portion brought into contact with the fixed member.

In a desirable aspect, the convex portion is formed along a circumferential direction about a rotation axis of the valve shaft holder.

In a more desirable aspect, a notch is formed in a part of the convex portion.

In a more desirable aspect, the lower stopper mechanism includes a fixed stopper body which is provided in a lower stopper attached to the guide bush and a movable stopper body provided in the valve shaft holder, and the notch is provided at the same position as the movable stopper body when viewed in the rotation axial direction.

In another desirable aspect, the convex portion is provided to be symmetrical with respect to the rotation axis of the valve shaft holder.

In another desirable aspect, the convex portion is disposed at a plurality of positions around the rotation axis of the valve shaft holder.

In another desirable aspect, the fixed member includes a cylindrical portion to which the valve shaft is bonded and fixed and a disk-shaped portion which extends outward from a lower end portion of the cylindrical portion to be brought into contact with the convex portion of the valve shaft holder.

In another desirable aspect, when the valve shaft holder is located at the lowest position by the lower stopper mechanism, the valve body is pressed against the valve seat by the urging force of the urging member and the convex portion of the valve shaft holder is separated from the fixed member. Meanwhile, when the valve shaft holder moves up while rotating with respect to the guide bush through the screw feeding mechanism, the convex portion of the valve shaft holder comes into contact with the fixed member fixed to the valve shaft.

### EFFECT OF THE INVENTION

According to the invention, since a part of the facing surface near the fixed member in the valve shaft holder is provided with the convex portion brought into contact with the fixed member (that is, the convex portion having a surface area (a facing area) smaller than the surface area of the facing surface near the fixed member in the valve shaft holder, a contact area of the valve shaft holder with respect to the fixed member decreases. For that reason, since the contact resistance (the rotation sliding resistance) generated, for example, when the valve shaft holder comes into contact with the fixed member decreases, the sliding performance between the valve shaft holder and the fixed member at the time of opening the valve becomes satisfactory and the positional misalignment (loss of synchronization) or the stop of the rotor is prevented. Accordingly, it is possible to prevent degradation in responsiveness and to suppress the axial misalignment of the valve shaft.

Further, since the convex portion is formed along the circumferential direction about the rotation axis of the valve shaft holder and the is formed in a part of the convex portion, the position of the weld line or parting line formed at the time of molding and the position of the notch are aligned to each other, that is, the notch is formed at a position where the weld line and the parting line are formed at the time of molding, for example, in a case where the valve shaft holder is formed as a molded product of resin or the like. Accordingly, since the contact resistance (the rotation sliding resistance) is further decreased and the flatness of the sliding surface of the valve shaft holder is improved, the axial misalignment of the valve shaft can be further suppressed.

### BRIEF DESCRIPTION OF DRAWINGS

Fig. 1 is a longitudinal sectional view illustrating a fully closed state of one embodiment of an electric valve according to the invention;
Fig. 2 is a longitudinal sectional view illustrating a state where a valve shaft holder and a fixed member come into contact with each other in one embodiment of the electric valve according to the invention;
Fig. 3 is a diagram illustrating the valve shaft holder illustrated in Fig. 1, where Fig. 3(A) is a perspective view and Fig. 3(B) is a top view;
Fig. 4 is a diagram illustrating another example (a first example) of the valve shaft holder illustrated in Fig. 1, where Fig. 4(A) is a perspective view and Fig. 4(B) is a top view;
Fig. 5 is a diagram illustrating another example (a second example) of the valve shaft holder illustrated in Fig. 1, where Fig. 5(A) is a perspective view and Fig. 5(B) is a top view;
Fig. 6 is a diagram illustrating another example (a third example) of the valve shaft holder illustrated in Fig. 1, where Fig. 6(A) is a perspective view and Fig. 6(B) is a top view;
Fig. 7 is a diagram illustrating another example (a fourth example) of the valve shaft holder illustrated in Fig. 1, where Fig. 7(A) is a perspective view and Fig. 7(B) is a top view; and
Fig. 8 is a diagram illustrating the fixed member illustrated in Fig. 1, where Fig. 8(A) is a top view, Fig. 8(B) is a longitudinal sectional view, and Fig. 8(C) is a bottom view.

### MODE(S) FOR CARRYING OUT THE INVENTION

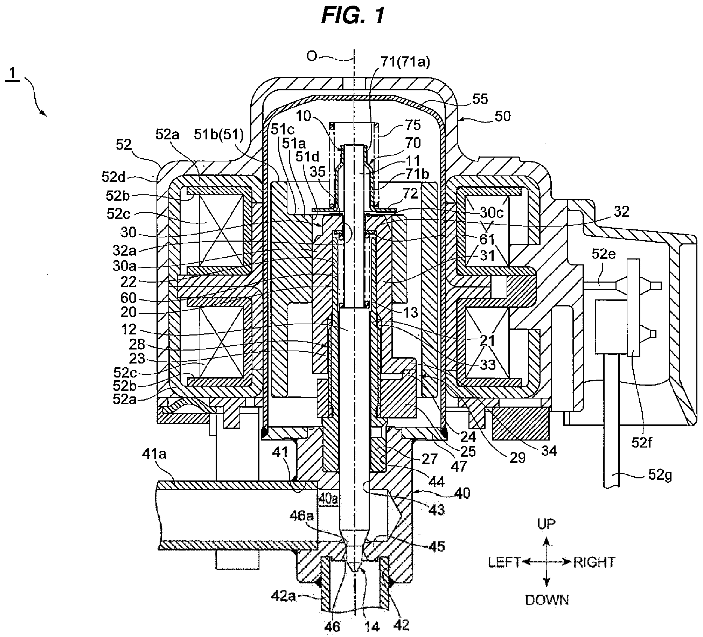

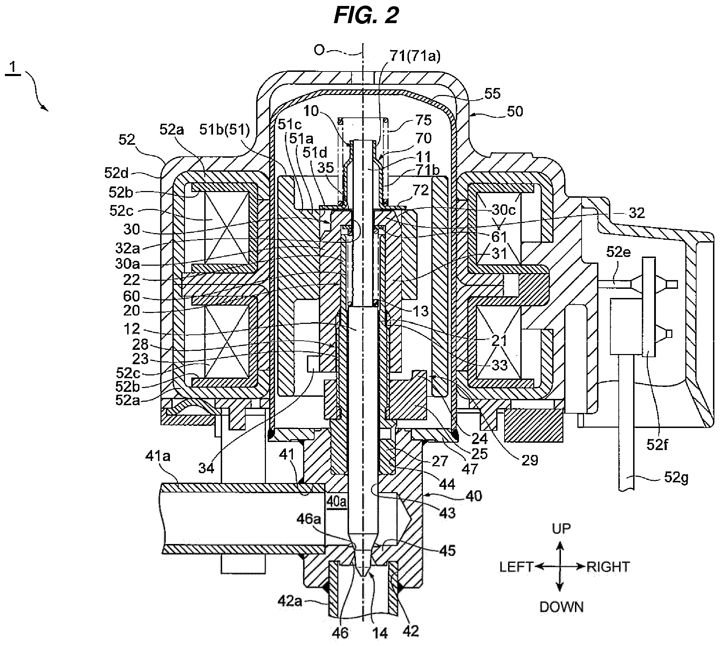

Hereinafter, an embodiment of the invention will be described with reference to the drawings. In the drawings, there is a case in which a gap formed between members or a separation distance between members is drawn exaggeratedly in order to help the comprehension of the invention and the convenience in drawing. Further, in the specification, a description indicating the positions and directions in the vertical and horizontal directions is based on directional arrows display in Figs. 1 and 2 and does not indicate the positions and directions in an actual use state.

Figs. 1 and 2 are longitudinal sectional views illustrating one embodiment of an electric valve according to the invention, Fig. 1 is a diagram illustrating a fully closed state (a state where a rotor and a valve shaft holder are located the lowest position), and Fig. 2 is a diagram illustrating a state where the valve shaft holder and a fixed member come into contact with each other.

An electric valve 1 of the embodiment illustrated in the drawings is used while being incorporated in a flow control valve or the like in a refrigeration cycle of an air conditioner, a refrigerator, or the like and mainly includes a valve shaft 10 provided with a valve body 14, a guide bush 20, a valve shaft holder 30, a valve main body 40, a can 55, a stepping motor 50 including a rotor 51 and a stator 52, a compression coil spring (an urging member) 60, a fixed member 70 serving as a stopper, a screw feeding mechanism 28, and a lower stopper mechanism 29.

The valve shaft 10 includes an upper small-diameter portion 11 and a lower large-diameter portion 12 from above and the stepped (here, three-stage) inverted conical valve body 14 for controlling the flow rate of the fluid (refrigerant) flowing through a valve opening 46 is integrally formed at a lower end portion of the lower large-diameter portion 12.

The guide bush 20 includes a cylindrical portion 21 into which (the lower large-diameter portion 12 of) the valve shaft 10 is inserted to be movable (slidable) in the direction of the axis O and rotatable about the axis O and an extension portion 22 which extends upward from an upper end portion of the cylindrical portion 21, has an inner diameter larger than the cylindrical portion 21, and allows an upper end side of the lower large-diameter portion 12 of the valve shaft 10 and a lower end side of the upper small-diameter portion 11 thereof to be inserted thereinto. The outer periphery of the cylindrical portion 21 of the guide bush 20 is provided with a fixing screw portion (a male screw portion) 23 which constitutes one side of the screw feeding mechanism 28 for elevating the valve body 14 of the valve shaft 10 relative to a valve seat 46a of the valve main body 40 in response to the rotational driving of the rotor 51. Further, a lower portion of the cylindrical portion 21 (a lower portion of the fixing screw portion 23) is formed to have a large diameter and is formed as a fitting portion 27 to a fitting hole 44 of the valve main body 40. A lower stopper 25 is fixed to (a lower portion of the valve shaft holder 30 of) the fixing screw portion 23 and a fixed stopper body 24 which constitutes one side of the lower stopper mechanism 29 for regulating the downward rotation movement of the valve shaft holder 30 protrudes from the outer periphery of the lower stopper 25.

The valve shaft holder 30 includes a cylindrical portion 31 which is formed of, for example, resin and allows the guide bush 20 to be inserted thereinto and a ceiling portion 32 which is provided with an insertion hole 32a into which an upper end portion of (the upper small-diameter portion 11 of) the valve shaft 10 is inserted (to be relatively movable in the direction of the axis O and rotatable about the axis O). The inner periphery of the cylindrical portion 31 of the valve shaft holder 30 is provided with a movable screw portion (a female screw portion) 33 which is threaded into the fixing screw portion 23 of the guide bush 20 to form the screw feeding mechanism 28 and the lower end of the outer periphery of the cylindrical portion 31 is integrally provided with a movable stopper body 34 which constitutes the other side of the lower stopper mechanism 29.

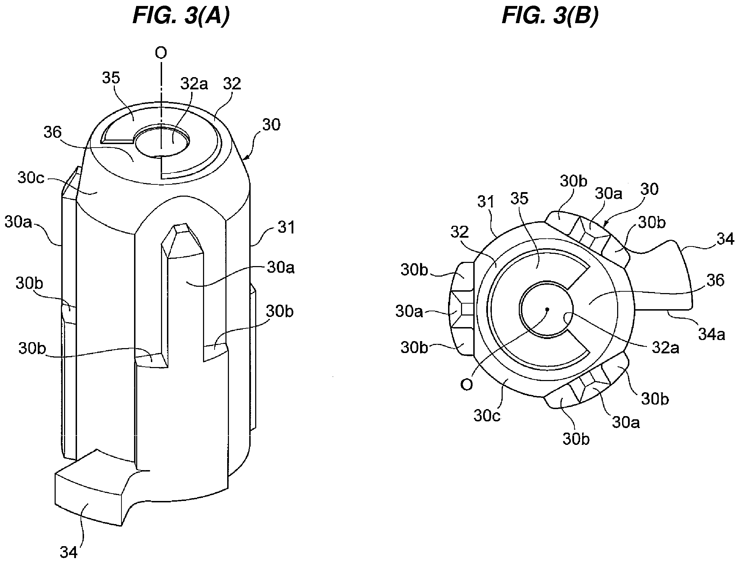

Further, a upper surface of the ceiling portion 32 of the valve shaft holder 30 (a surface facing a disk-shaped portion 72 of the fixed member 70 to be described later) is integrally provided with a convex portion 35 which has a substantially C-shape in the top view (when viewed in the direction of the axis O) as understood from Fig. 3 together with Figs. 1 and 2. Specifically, the convex portion 35 protrudes upward along the circumferential direction about the insertion hole 32a of the upper surface of the ceiling portion 32 (in other words, about the rotation axis O of the valve shaft holder 30) and has a shape in which a part (in this example, an upper portion of one end surface 34a in the circumferential direction of the movable stopper body 34, that is, a portion at the same position as one end surface 34a in the circumferential direction of the movable stopper body 34 when viewed in the direction of the axis O) is notched (notch 36).

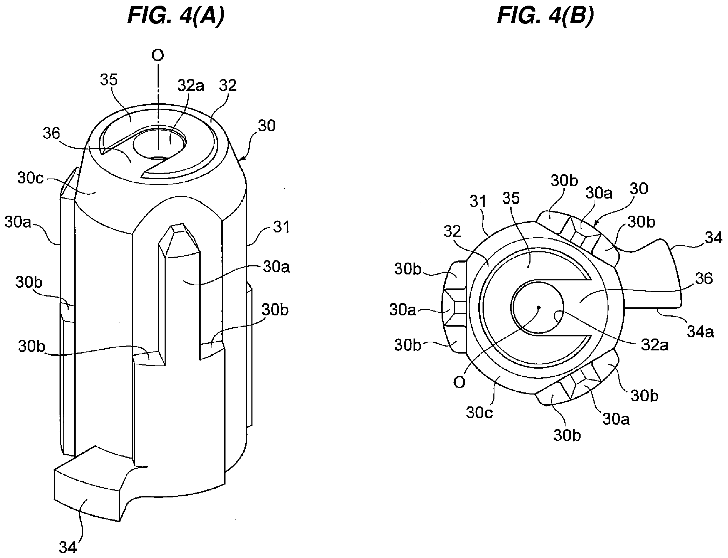

Further, in this example, the convex portion 35 has a substantially C-shape in the top view and both end portions of the substantially C-shaped convex portion 35 in the circumferential direction in the radial direction (of the valve shaft holder 30) (in other words, the notch 36 is formed to have a substantially fan shape in the top view). For example, as illustrated in Fig. 4, the convex portion may be formed so that both end portions of the convex portion 35 in the circumferential direction are parallel to each other, more specifically, the notch 36 of the convex portion 35 has the substantially same width as the insertion hole 32a.

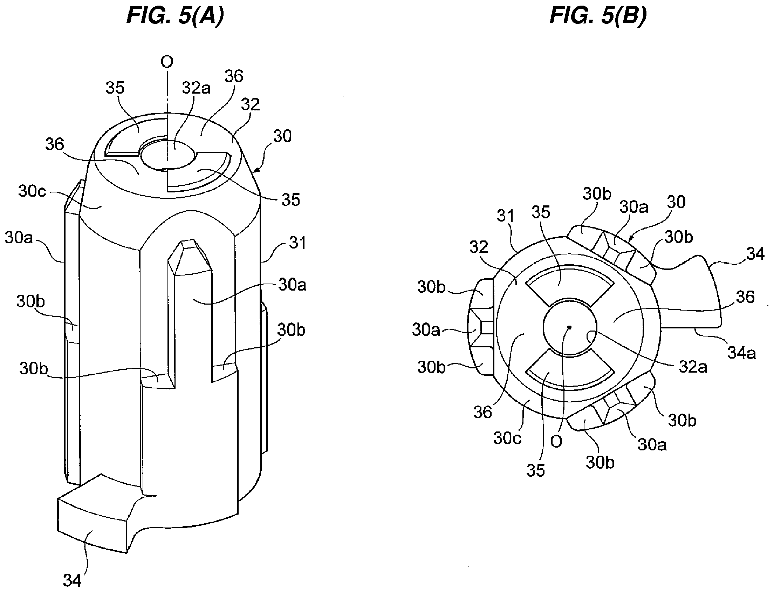

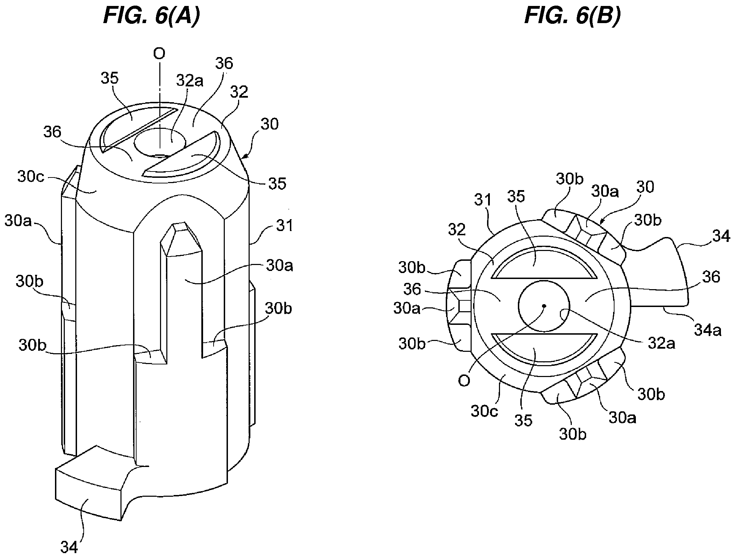

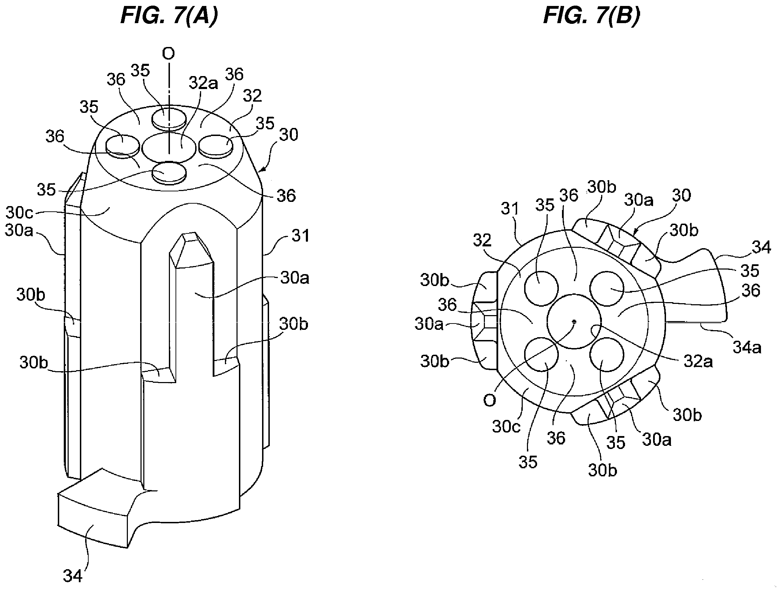

Further, for example, as illustrated in Figs. 5 to 7, the convex portions 35 may be arranged on the upper surface of the ceiling portion 32 of the valve shaft holder 30 to be symmetrical with respect to the rotation axis O of the valve shaft holder 30. In the example illustrated in Fig. 5, two convex portions 35 having a substantially fan shape in the top view (here, a fan shape of which a center angle is about 90°) are arranged around the insertion hole 32a to be located at the opposite side with respect to the axis O and a gap between two convex portions 35 is formed as the notch 36 having a substantially fane shape in the top view (here, a fan shape of which a center angle is about 90°). Further, in the example illustrated in Fig. 6, two convex portions 35 having a half oval shape in the top view are arranged around the insertion hole 32a to be located at the opposite side with respect to the axis O and a gap between two convex portions 35 is formed as the notch 36 having the substantially same width as the insertion hole 32a. Further, in the example illustrated in Fig. 7, four convex portions 35 having a substantially circular shape in the top view are arranged around the insertion hole 32a at the substantially same interval and a gap between the convex portions 35 is formed as the notch 36. Additionally, also in the examples illustrated in Figs. 5 to 7, one notch 36 is formed at the upper portion of one end surface 34a in the circumferential direction (the rotation direction) of the movable stopper body 34, that is, the same position as one end surface 34a in the circumferential direction of the movable stopper body 34 when viewed in the direction of the axis O.

As described above, when the convex portions 35 are disposed on the upper surface of the ceiling portion 32 of the valve shaft holder 30 to be symmetrical with respect to the rotation axis O of the valve shaft holder 30, the axial misalignment of the valve shaft 10 can be effectively suppressed. Meanwhile, when the convex portions 35 are arranged at a plurality of positions about the rotation axis O of the valve shaft holder 30, a contact area of the valve shaft holder 30 with respect to (the convex portion 35 of) the fixed member 70 can be further decreased (which will be described later.

Further, a compression coil spring (an urging member) 60 which urges the valve shaft 10 (the valve body 14) in a downward direction (the valve closing direction), in other words, a direction in which the valve shaft 10 and the valve shaft holder 30 are separated from each other in the elevation direction (the direction of the axis O) is compressed between the lower surface of the ceiling portion 32 of the valve shaft holder 30 and a step surface 13 formed between the upper small-diameter portion 11 and the lower large-diameter portion 12 of the valve shaft 10 to be externally inserted into the upper small-diameter portion 11 of the valve shaft 10 while sandwiching a disk-shaped pressing plate (washer) 61 which is disposed on the lower surface of the ceiling portion 32 of the valve shaft holder 30.

The valve main body 40 is formed as a cylindrical body by metal such as brass or SUS. The valve main body 40 includes a valve chamber 40a which receives and discharges a fluid, a first guide pipe 41a is connected and fixed to a first lateral opening 41 provided at the side portion of the valve chamber 40a by brazing or the like, the ceiling portion of the valve chamber 40a is provided with an insertion hole 43 into which (the lower large-diameter portion 12 of) the valve shaft 10 is inserted to be relatively movable (slidable) in the direction of the axis O and rotatable about the axis O and a fitting hole 44 to which a lower portion (the fitting portion 27) of the guide bush 20 is fitted to be attached and fixed thereto, and a second guide pipe 42a is connected and fixed to a second lateral opening 42 provided at the lower portion of the valve chamber 40a by brazing or the like. Further, a bottom wall 45 between the valve chamber 40a and the second opening 42 is provided with a stepped valve opening 46 having the valve seat 46a toward and from which the valve body 14 moves.

A flange-shaped plate 47 is fixed to an upper end portion of the valve main body 40 by caulking or the like and a lower end portion of the ceiling attached cylindrical can 55 is sealed and joined to a step portion provided at the outer periphery of the flange-shaped plate 47 by butt welding.

The rotor 51 is rotatably disposed at the inside of the can 55 and the outside of the guide bush 20 and the valve shaft holder 30 and the stator 52 including a yoke 52a, a bobbin 52b, a stator coil 52c, and a resin mold cover 52d, and the like are disposed at the outside of the can 55 to rotationally drive the rotor 51. A plurality of lead terminals 52e are connected to the stator coil 52c, a plurality of lead wires 52g are connected to the lead terminals 52e through a substrate 52f, and the rotor 51 disposed inside the can 55 rotates about the axis O by energization excitation to the stator coil 52c.

The rotor 51 which is disposed inside the can 55 is engaged and supported by the valve shaft holder 30 and the valve shaft holder 30 (integrally) rotates along with the rotor 51.

Specifically, the rotor 51 is formed as a double pipe structure including an inner cylinder 51a, an outer cylinder 51b, and a connection portion 51c connecting the inner cylinder 51a and the outer cylinder 51b at a position rotated about the axis O by a predetermined angle and a longitudinal groove 51d is formed at the inner periphery of the inner cylinder 51a to extend along the direction of the axis O (the vertical direction) (for example, at the angular interval of 120° about the axis O).

Meanwhile, (an upper half portion of) the outer periphery of the valve shaft holder 30 is provided with a tapered surface portion 30c having a truncated conical surface at its upper end as understood from Fig. 3, a protrusion 30a which extends in the vertical direction is provided in a protruding manner below the tapered surface portion 30c (for example, at the angular interval of 120° about the axis O), and an upward locking surface 30b which supports the rotor 51 is formed at both sides of the lower portion of the protrusion 30a.

In this way, when the longitudinal groove 51d of the inner cylinder 51a of the rotor 51 engages with the protrusion 30a of the valve shaft holder 30 and the lower surface of the inner cylinder 51a of the rotor 51 comes into contact with the locking surface 30b of the valve shaft holder 30, the rotor 51 is supported and fixed while being positioned to the valve shaft holder 30 and the valve shaft holder 30 rotates along with the rotor 51 while supporting the rotor 51 inside the can 55.

The fixed member 70 which is externally fitted and fixed to the upper end portion of (the upper small-diameter portion 11 of) the valve shaft 10 is provided above the rotor 51 and the valve shaft holder 30 in order to prevent the relative movement between the valve shaft holder 30 and the rotor 51 in the elevation direction (in other words, so that the rotor 51 is pressed downward with respect to the valve shaft holder 30) and to connect the valve shaft 10 and the valve shaft holder 30 to each other.

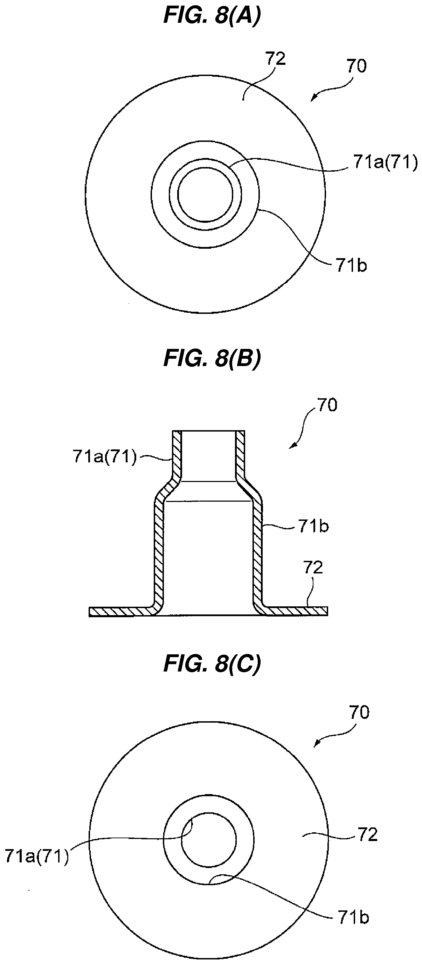

The fixed member 70 is formed of, for example, a metallic member such as SUS by pressing and includes a stepped cylindrical portion 71 which includes a small-diameter upper portion 71a and a large-diameter lower portion 71b externally fitted to the upper end portion of (the upper small-diameter portion 11 of) the valve shaft 10 and bonded and fixed thereto by press-inserting and welding and the disk-shaped portion 72 which extends outward (to the vicinity of the inner cylinder 51a of the rotor 51) from the lower end portion of (the large-diameter lower portion 71b of) the cylindrical portion 71 as understood from Fig. 8 together with Figs. 1 and 2. The lower surface of the disk-shaped portion 72 is made to face the upper surface (the facing surface) of the valve shaft holder 30 and the upper surface of the rotor 51 and is brought into contact with (the upper surface of) the convex portion 35 provided on the upper surface of the valve shaft holder 30 and the upper surface of the rotor 51.

That is, the rotor 51 is sandwiched between (the disk-shaped portion 72 of) the fixed member 70 and the valve shaft holder 30 which is urged upward by the urging force of the compression coil spring 60.

Further, (the large-diameter lower portion 71b of the cylindrical portion 71 of) the fixed member 70 fixed to the upper end portion of the valve shaft 10 is provided with a return spring 75 which is formed as a coil spring urging the valve shaft holder 30 toward the guide bush 20 in order to prevent a problem in which the valve shaft holder 30 moves upward excessively relative to the guide bush 20 during an operation so that the engagement between the fixing screw portion 23 of the guide bush 20 and the movable screw portion 33 of the valve shaft holder 30 is released.

In the electric valve 1 with such a configuration, when the rotor 51 rotates by energization excitation to (the stator coil 52c of) the stator 52, the valve shaft holder 30 and the valve shaft 10 rotate together. At this time, the valve shaft 10 is elevated along with the valve body 14 by the screw feeding mechanism 28 including the fixing screw portion 23 of the guide bush 20 and the movable screw portion 33 of the valve shaft holder 30. Accordingly, a gap (a lift amount and a valve opening degree) between the valve body 14 and the valve seat 46a is increased and decreased so that a flow rate of a fluid such as a refrigerant is adjusted.

Further, in the electric valve 1 of this example, when the valve shaft 10 moves down and the valve body 14 sits on the valve seat 46a, the movable stopper body 34 of the valve shaft holder 30 and the fixed stopper body 24 fixed to the guide bush 20 are separated from each other. Then, when the rotor 51 is further rotated by further energization excitation to (the stator coil 52c of) the stator 52 and the valve shaft holder 30 rotates to move down, the movable stopper body 34 of the valve shaft holder 30 and the fixed stopper body 24 fixed to the guide bush 20 come into contact with each other, that is, the downward rotation movement of the valve shaft holder 30 is stopped by the lower stopper mechanism 29. Accordingly, the compression coil spring 60 which is interposed between the valve shaft holder 30 and the valve shaft 10 is compressed so that the valve body 14 is pressed against the valve seat 46a.

Specifically, energization excitation to the stator coil 52c is performed in one direction at the time of closing the electric valve 1. Accordingly, the rotor 51 is rotated and thus the valve shaft holder 30 rotates relative to the guide bush 20. Here, the valve shaft holder 30 moves down by the screw feeding mechanism 28 including (the fixing screw portion 23 of) the guide bush 20 and (the movable screw portion 33 of) the valve shaft holder 30. Accordingly, the valve shaft 10 moves down and the valve body 14 sits on the valve seat 46a to close the valve opening 46. At this time, the movable stopper body 34 of the valve shaft holder 30 and the fixed stopper body 24 of the guide bush 20 constituting the lower stopper mechanism 29 are separated from each other (a state illustrated in Fig. 2).

When energization excitation to the stator coil 52c is further performed in one direction from the above-described state, the valve shaft holder 30 further moves downward (against the urging force of the compression coil spring 60) by the screw feeding mechanism 28 while the valve body 14 closes the valve opening 46 (that is, the valve shaft 10 is stopped). When the valve shaft holder 30 moves down by a predetermined amount, the movable stopper body 34 of the valve shaft holder 30 and the fixed stopper body 24 of the guide bush 20 come into contact with each other so that the further downward movement of the valve shaft holder 30 is regulated by the lower stopper mechanism 29. At this time, since the compression coil spring 60 interposed between the valve shaft holder 30 and the valve shaft 10 is compressed, the valve body 16 is pressed against the valve seat 46a and thus a valve closing performance is ensured (a fully closed state illustrated in Fig. 1). At this time, (the convex portion 35 of) the valve shaft holder 30 is separated from the fixed member 70 fixed to the valve shaft 10 by a predetermined gap in the elevation direction.

Meanwhile, energization excitation to the stator coil 52c is performed in the other direction at the time of opening the electric valve 1 from the fully closed state. Accordingly, the rotor 51 is rotated in a direction opposite to the above-described direction relative to the guide bush 20 fixed to the valve main body 40 and the valve shaft holder 30 moves up by the screw feeding mechanism 28. Here, since (the convex portion 35 of) the valve shaft holder 30 is located to be separated from the fixed member 70 fixed to the valve shaft 10 by a predetermined gap, the valve shaft holder 30 moves up while the valve body 14 sits on the valve seat 46a to close the valve opening 46 (while the valve shaft 10 is stopped) in the meantime (while the valve shaft holder 30 moves up by a predetermined gap).

When energization excitation to the stator coil 52c in the other direction is further performed from the above-described state so that the valve shaft holder 30 moves up by the above-described predetermined gap, (the upper surface of) the convex portion 35 provided in the ceiling portion 32 of the valve shaft holder 30 comes into contact with (the lower surface of the disk-shaped portion 72) the fixed member 70 fixed to the valve shaft 10. Accordingly, the valve shaft holder 30 moves up (in a rotation state) along with the valve shaft 10 and the valve body 14 of the lower end of the valve shaft 10 moves upward to open the valve opening 46.

In this way, in the electric valve 1 of the embodiment, since the convex portion 35 which comes into contact with the fixed member 70 (that is, the convex portion 35 having a surface area (a facing area) smaller than that of the facing surface near the fixed member 70 in the valve shaft holder 30) is provided in the upper surface of the valve shaft holder 30 (a part of the facing surface near the fixed member 70 in the valve shaft holder 30), a contact area of the valve shaft holder 30 with respect to the fixed member 70 decreases. For that reason, since the contact resistance (the rotation sliding resistance) generated, for example, when the valve shaft holder 30 comes into contact with the fixed member 70 decreases, the sliding performance between the valve shaft holder 30 and the fixed member 70 at the time of opening the valve becomes satisfactory and the positional misalignment (loss of synchronization) or the stop of the rotor 51 is prevented. Therefore, it is possible to prevent degradation in responsiveness and to suppress the axial misalignment of the valve shaft 10.

Further, since the convex portion 35 is formed along the circumferential direction about the rotation axis O of the valve shaft holder 30 and the notch 36 is formed in a part of the convex portion 35, the position of the weld line or parting line formed at the time of molding and the position of the notch 36 are aligned to each other, that is, the notch 36 is formed at a position where the weld line and the parting line are formed at the time of molding, for example, in a case where the valve shaft holder 30 is formed as a molded product of resin or the like. Accordingly, since the contact resistance (the rotation sliding resistance) is further decreased and the flatness of the sliding surface of the valve shaft holder 30 is improved, the axial misalignment of the valve shaft 10 can be further suppressed.

For example, in a case where a gate for injecting molding resin is provided at the side opposite to the movable stopper body 34 of the valve shaft holder 30, the notch 36 is provided above the movable stopper body 34 (more specifically, the upper portion of one end surface 34a of the movable stopper body 34 in the circumferential direction) as described above so that a weld line or parting line formed at the time of molding does not exist in the convex portion 35 of the valve shaft holder 30. For that reason, since the contact resistance (the rotation sliding resistance) can be further decreased and the flatness of the sliding surface of the valve shaft holder 30 can be increased, the axial misalignment of the valve shaft 10 can be further suppressed.

Additionally, in the above-described embodiment, the electric valve in which the valve body 14 sits on the valve seat 46a has been described. However, for example, also in a non-close type electric valve in which a predetermined gap is formed between the valve body and the valve seat (that is, the valve body does not sit on the valve seat) when the valve body is located at the lowest position (which is generally a fully closed state), a contact area of the valve shaft holder 30 with respect to the fixed member 70 decreases when the upper surface of the valve shaft holder is provided with the convex portion and the notch is formed at a part of the convex portion as in the above-described embodiment. Accordingly, since the flatness of the upper surface (the convex portion of) of the valve shaft holder increases, it is needless to mention that the same operation and effect can be obtained as described above.

### EXPLANATIONS OF LETTERS OR NUMERALS

- 1: electric valve
- 10: valve shaft
- 14: valve body
- 20: guide bush
- 21: cylindrical portion
- 23: fixing screw portion (male screw portion)
- 24: fixed stopper body
- 28: screw feeding mechanism
- 29: lower stopper mechanism
- 30: valve shaft holder
- 30a: protrusion
- 30b: locking surface
- 30c: tapered surface portion
- 31: cylindrical portion
- 32: ceiling portion
- 33: movable screw portion (female screw portion)
- 34: movable stopper body
- 35: convex portion
- 36: notch
- 40: valve main body
- 40a: valve chamber
- 41: first opening
- 41a: first guide pipe
- 42: second opening
- 42a: second guide pipe
- 43: insertion hole
- 44: fitting hole
- 45: bottom wall
- 46: valve opening
- 46a: valve seat
- 50: stepping motor
- 51: rotor
- 52: stator
- 55: can
- 60: compression coil spring (urging member)
- 70: fixed member
- 71: cylindrical portion
- 71a: small-diameter upper portion
- 71b: large-diameter lower portion
- 72: disk-shaped portion
- O: axis

## Claims

1. An electric valve (1) comprising:
a valve shaft (10) which is provided with a valve body (14);
a guide bush (20) into which the valve shaft (10) is inserted to be relatively movable in an axial direction and to be rotatable;
a valve main body (40) which includes a valve opening (46) having a valve seat (46a) toward and from which the valve body (14) moves and which has the guide bush (20) attached and fixed thereto;
a valve shaft holder (30) which is externally attached to the valve shaft (10);
an urging member (60) that is interposed between the valve shaft (10) and the valve shaft holder (30) to urge the valve body (14) in a valve closing direction;
a fixed member (70) that is fixed to the valve shaft (10) to connect the valve shaft holder (30) to the valve shaft (10) and is brought into contact with the valve shaft holder (30) by an urging force of the urging member (60);
a motor (50) which includes a rotor (51) and a stator (52) for rotating the valve shaft holder (30) with respect to the guide bush (20);
a screw feeding mechanism (28) which is provided between the guide bush (20) and the valve shaft holder (30) to elevate the valve body (14) of the valve shaft (10) with respect to the valve seat (46a) of the valve main body (40) in response to the rotational driving of the rotor (51); and
a lower stopper mechanism (29) which regulates a downward rotation movement of the valve shaft holder (30),
wherein a part of a facing surface near the fixed member (70) in the valve shaft holder (30) is provided with a convex portion (35) brought into contact with the fixed member (70).

2. The electric valve (1) according to claim 1,
wherein the convex portion (35) is formed along a circumferential direction about a rotation axis of the valve shaft holder (30).

3. The electric valve (1) according to claim 2,
wherein a notch (36) is formed in a part of the convex portion (35).

4. The electric valve (1) according to claim 3,
wherein the lower stopper mechanism (29) includes a fixed stopper body (24) which is provided in a lower stopper (25) attached to the guide bush (20) and a movable stopper body (34) provided in the valve shaft holder (30), and
wherein the notch (36) is provided at the same position as the movable stopper body (34) when viewed in the rotation axial direction.

5. The electric valve (1) according to claim 2,
wherein the convex portion (35) is provided to be symmetrical with respect to the rotation axis of the valve shaft holder (30).

6. The electric valve (1) according to claim 2,
wherein the convex portion (35) is disposed at a plurality of positions around the rotation axis of the valve shaft holder (30).

7. The electric valve (1) according to any one of claims 1 to 6,
wherein the fixed member (70) includes a cylindrical portion (71) to which the valve shaft (10) is bonded and fixed and a disk-shaped portion (72) which extends outward from a lower end portion of the cylindrical portion (71) to be brought into contact with the convex portion (35) of the valve shaft holder (30).

8. The electric valve (1) according to any one of claims 1 to 7,
wherein when the valve shaft holder (30) is located at the lowest position by the lower stopper mechanism (29), the valve body (14) is pressed against the valve seat (46a) by the urging force of the urging member (60) and the convex portion (35) of the valve shaft holder (30) is separated from the fixed member (70), and
wherein when the valve shaft holder (30) moves up while rotating with respect to the guide bush (20) through the screw feeding mechanism (28), the convex portion (35) of the valve shaft holder (30) comes into contact with the fixed member (70) fixed to the valve shaft (10).

## Patentansprüche

1. Ein elektrisches Ventil (1), das aufweist:
einen Ventilschaft (10), der mit einem Ventilkörper (14) versehen ist;
eine Führungshülse (20), in die der Ventilschaft (10) eingesetzt ist, so dass er in einer axialen Richtung relativ beweglich ist und rotierbar ist;
einen Ventilhauptkörper (40), der eine Ventilöffnung (46) aufweist, die einen Ventilsitz (46a) aufweist, in Richtung auf den und in Richtung von dem sich der Ventilkörper (14) bewegt, und an dem die Führungshülse (14) angebracht und befestigt ist;
einen Ventilschafthalter (30), der außen an dem Ventilschaft (10) angebracht ist;
ein Beaufschlagungselement (60), das zwischen den Ventilschaft (10) und den Ventilschafthalter (30) dazwischengesetzt ist, um den Ventilkörper (14) in einer Ventilschließrichtung zu beaufschlagen;
ein befestigtes Element (70), das an dem Ventilschaft (10) befestigt ist, um den Ventilschafthalter (30) mit dem Ventilschaft (10) zu verbinden, und der durch eine Beaufschlagungskraft des Beaufschlagungselements (60) in Kontakt mit dem Ventilschafthalter (30) gebracht wird;
einen Motor (50), der einen Rotor (51) und einen Stator (52) aufweist, um den Ventilschafthalter (30) in Bezug auf die Führungshülse (20) zu rotieren;
einen Schraubzuführungsmechanismus (28), der zwischen der Führungshülse (20) und dem Ventilschafthalter (30) vorgesehen ist, um den Ventilsitz (14) des Ventilschafts bezüglich des Ventilsitzes (46a) des Ventilkörpers (40) anzuheben, und zwar in Reaktion auf den Rotationsantrieb des Rotors (51); und
einen unteren Anschlagmechanismus (29), der eine Abwärtsdrehung des Ventilschafthalters (30) reguliert,
wobei ein Teil einer Stirnfläche in der Nähe des befestigten Elements (70) in dem Ventilschafthalter (30) mit einem konvexen Bereich (35) versehen ist, der in Kontakt mit dem befestigten Element (70) gebracht ist.

2. Das elektrische Ventil (1) gemäß Anspruch 1,
wobei der konvexe Bereich (35) entlang einer Umfangsrichtung um eine Rotationsachse des Ventilschafthalters (30) herum ausgeformt ist.

3. Das elektrische Ventil (1) gemäß Anspruch 2,
wobei eine Kerbe (36) in einem Teil des konvexen Bereichs (35) ausgeformt ist.

4. Das elektrische Ventil (1) gemäß Anspruch 3,
wobei der Anschlagmechanismus (29) einen befestigten Anschlagkörper (24) enthält, der einem unteren Anschlag (25) vorgesehen ist, der an der Führungshülse (20) angebracht ist, und einen beweglichen Anschlagkörper (34), der in dem Ventilschafthalter (30) vorgesehen ist, und
wobei die Kerbe (36) in Blickrichtung der Rotationsachse an der gleichen Position wie der bewegliche Anschlagkörper (34) vorgesehen ist.

5. Das elektrische Ventil (1) gemäß Anspruch 2,
wobei der konvexe Bereich (35) symmetrisch in Bezug auf die Rotationsachse des Ventilschafthalters (30) vorgesehen ist.

6. Das elektrische Ventil (1) gemäß Anspruch 2,
wobei der konvexe Bereich (35) an einer Vielzahl von Positionen um die Rotationsachse des Ventilschafthalters (30) herum angeordnet ist.

7. Das elektrische Ventil (1) gemäß einem der Ansprüche 1 bis 6, wobei das befestigte Element (70) einen zylindrischen Bereich (71) aufweist, an den ein Ventilschaft (10) angeschweißt und befestigt ist und einen scheibenförmigen Bereich (72), der sich auswärts von einem unteren Endbereich des zylindrischen Bereichs (71) erstreckt, und der mit dem konvexen Bereich (35) des Ventilschafthalters (30) in Kontakt zu bringen ist.

8. Das elektrische Ventil (1) gemäß einem der Ansprüche 1 bis 7,
wobei, wenn sich der Ventilschafthalter (30) durch den Anschlagmechanismus (29) an der untersten Position befindet, der Ventilkörper (14) gegen den Ventilsitz (46a) durch die Beaufschlagungskraft des Beaufschlagungselements (60) angedrückt wird, und der konvexe Bereich (35) des Ventilschafthalters (30) von dem befestigten Element (70) getrennt ist, und
wobei bei einer Aufwärtsbewegung des Ventilschafthalters (30) durch den Schraubzuführmechanismus (28), wobei sich der Ventilschafthalter (30) in Bezug auf die Führungshülse (20) dreht, der konvexe Bereich (35) des Ventilschafthalters (30) in Kontakt mit dem befestigten Element (70) kommt, das an dem Ventilschaft (10) befestigt ist.

## Revendications

1. Une valve électrique (1) comprenant :
une tige de valve (10) qui est pourvue d'un corps de valve (14);
une bague de guidage (20) dans laquelle la tige de valve (10) est insérée afin d'être relativement mobile dans une direction axiale et afin d'être rotatif;
un corps principal de valve (40) qui comprend une ouverture de valve (46) ayant un siège de valve (46a) vers lequel et à partir duquel le corps de valve (14) bouge et qui a une bague de guidage (20) attachée et fixée à celui-ci;
un porteur de tige de valve (30) qui est attaché à l'extérieur de la tige de valve (10);
un membre de pression (60) qui est interposé entre la tige de valve (10) et le porteur de tige de valve (30) pour pousser le corps de valve (14) dans une direction de fermeture de valve;
un membre fixé (70) qui est fixé à la tige de valve (10) pour connecter le porteur de tige de valve (30) à la tige de valve (10) et qui est mis en contact avec le porteur de tige de valve (30) par une force de pression du membre de pression (60) ;
un moteur (50) qui inclut un rotor (51) et un stator (52) pour roter le porteur de tige de valve (30) par rapport à la bague de guidage (20);
un mécanisme d'alimentation de type vis (28) qui est pourvu entre la bague de guidage (20) et le porteur de tige de valve (30) pour élever le corps de valve (14) de la tige de valve (10) par rapport au siège de valve (46a) du corps principal de valve (40) en réponse à l'entraînement rotatif du rotor (51); et
un mécanisme inférieur d'arrêt (29) qui contrôle une rotation vers le bas du porteur de tige de valve (30),
dans laquelle une portion d'une surface frontale près du membre fixé (70) dans le porteur de tige de valve (30) est pourvue d'une portion convexe (35) qui est mise en contact avec le membre fixé (70).

2. La valve électrique (1) selon revendication 1,
dans laquelle la portion convexe (35) est formée le long d'une direction circonférentielle autour d'une axe du porteur de tige de valve (30).

3. La valve électrique (1) selon revendication 2,
dans laquelle une encoche (36) est formée dans un élément de la partie convexe (35).

4. La valve électrique (1) selon revendication 3,
dans laquelle le mécanisme inférieur d'arrêt (29) inclut un corps de butée fixé (24) qui est pourvue dans une butée inférieure (25) attaché à la bague de guidage (20) et un corps de butée mobile (34) pourvu dans le porteur de tige (30), et
dans laquelle l'encoche (36) est pourvue dans la même position que le corps de butée mobile (34) vu en direction axiale de rotation.

5. La valve électrique (1) selon revendication 2,
dans laquelle la portion convexe (35) est pourvue afin d'être symétrique par rapport à l'axe de rotation du porteur de tige de valve (30).

6. La valve électrique (1) selon revendication 2,
dans laquelle la portion convexe (35) est disposée à une pluralité des positions autour de l'axe de rotation du porteur de tige de valve (30).

7. La valve électrique (1) selon une des revendications 1 à 6, dans laquelle le membre fixé (70) comprend une partie cylindrique (71) à laquelle la tige de valve (10) est soudée et fixée et une partie en forme de disque (72) qui s'étend vers l'extérieur d'une partie de bout inférieure de la partie cylindrique (71) à être mise en contact avec la partie convexe (35) du porteur de tige de valve (30).

8. La valve électrique selon une quelconque des revendications 1 à 7,
dans laquelle le porteur de tige de valve (30) est localisé à la position plus basse par le mécanisme d'arrêt inférieure (29), le corps de valve (14) est appuyé contre le siège de valve (46a) par la force de pression du membre de pression (60), et la portion convexe (35) du porteur de la tige de valve (30) est séparée du membre fixé (70), et
dans laquelle, lorsque le porteur de tige de valve (30) se déplace vers le haut en rotant par rapport à la bague de guidage (20) par le mécanisme d'alimentation de type vis (28), la partie convexe (35) du porteur de tige de valve (30) vient en contact avec le membre fixé (70) qui est fixé à la tige de valve (10).
